Europäisches Patentamt

European Patent Office

Office européen des brevets

(11) Publication number: **0 252 886 B1**

# EUROPEAN PATENT SPECIFICATION

(45) Date of publication of patent specification: **03.03.93**   (51) Int. Cl.⁵: **B29C 47/64**

(21) Application number: **87830186.0**

(22) Date of filing: **18.05.87**

(54) **Mixing process by means of screw threads operating contrarywise to the screw of an extruder.**

(30) Priority: **30.05.86 IT 4200486**

(43) Date of publication of application:
**13.01.88 Bulletin 88/02**

(45) Publication of the grant of the patent:
**03.03.93 Bulletin 93/09**

(84) Designated Contracting States:
**AT BE CH DE ES FR GB GR IT LI LU NL SE**

(56) References cited:
DE-A- 2 117 997    FR-A- 1 122 654
FR-A- 1 253 488    FR-A- 1 442 473
FR-A- 2 051 822    FR-A- 2 496 002
US-A- 3 211 209    US-A- 3 989 434

(73) Proprietor: **Gagliani, Guiseppe**
**Via Ugo la Malfa, 10126/2**
**I-90146 Palermo(IT)**

(72) Inventor: **Gagliani, Guiseppe**
**Via Ugo la Malfa, 10126/2**
**I-90146 Palermo(IT)**

(74) Representative: **Bazzichelli, Alfredo**
**c/o Società Italiana Brevetti S.p.A. Piazza di**
**Pietra, 39**
**I-00186 Roma (IT)**

EP 0 252 886 B1

**Description**

A mixing apparatus is a machine capable of homogenizing different components which have been appropriately dosed in percentages such as to obtain a product having better qualities in comparison with those of the single components.

A specific characteristic in these apparatuses is that the mixing is so homogeneous as to create total interpenetration of the individual components, thus avoiding anisotropy of the product. This apparatus, even if studied for mixing plastics, can be used, with suitable modifications, in any installation where the mixing of individual components is required. For example in the food, paper, chemical and pharmaceutical industries, for blendig, homogenizing, kneading, dispersing and dyeing chemical products, papers, dyes, oils, lubrificants, drugs, gums, adhesives, aluminium and foodstuffs.

At present, three advanced systems of mixing are known, which are frequently used for the production of plastic compounds.

1) A discontinuous system in which the material is first mixed and then placed in the extruder.

2) A continuous system in which the material is mixed in an extruder provided with two screws, rotating simultaneously.

3) A continuous system, patented by BUSS, in which the material is mixed in an extruding head with a screw having a rotating and sliding movement, which facilitates mixing of the material pushed by the screw.

The above mentioned systems, despite their technological value, are complicated to build, thus increasing production costs. Furthermore, the system based on the two rotating screws (2) has the disadvantage of a discontinuous speed in correspondence with adjacent points of the screws, causing a consequent increase in friction and high thermic gradients.

This fact, which might be the cause of degradation of certain materials to be mixed, makes it necessary to reduce the speed of rotation of the screws, thus decreasing production capacity. Furthermore, certain patents are known concerning mixers which are based on the principle of changing the speed profiles in the flow channels, thus improving the mixing, although imperfectly. In this regard mention is made of the mixers illustrated in the book "Polymer Extrusion" by Chris Rauwendaal: Pin Mixing Section, Dulmage Mixing Section, Saxton Mixing Section, Slotted Screw Flight, Cavity Transfer Mixing Section, Pineapple Mixing. The object of the method described herein is to eliminate the above mentioned disadvantages.

DE-A-2117997 describes an extruder in which two shafts rotating in the same direction are provided. Each shaft is provided with a screw and the screws on each shaft extend in opposite directions. Between portions of the screws a mixing section is provided having a screw of opposite direction with respect to the screw on the same shaft. The screws on one shaft are threadedly engaged with the screws on the other shaft.

Object of the present invention is a screw extruder for continuously blending, homogenizing, kneading and dispersing a material, comprising a cylinder and a screw shaft with an extruding screw contained in the cylinder, the extruding screw having on the rear part of the shaft a first screw portion extending in one direction and on the forward part of the shaft a second screw portion extending also in the one direction, characterized in that between said first and second screw portions a mixing section is located comprising a single or multiple forward screw thread, formed by threading the shaft in the same direction as the first and second screw portions, and a single or multiple counter screw thread, formed by threading the shaft in the opposite direction with intersection of the forward screw thread, the forward screw thread and the counter screw thread having the same pitch and the same thread mutiplicity to delimit therebetween channels that cross each other at a plurality of free intersections, one of the channels imparting a forward movement to the material while the other channel is imparting a return movement to a part of the material to create a backward flow of material which, on meeting the forward flow, causes the material from the two crossing channels to mix, whereby the mixing becomes increasingly thorough as the forward flow of material proceeds, the forward and counter screw threads and the first and second screw portions having the same diameter.

In the drawings:

figure 1 is a view of a portion of the screw provided with a mixing section;

figure 2 is a development in plane view of the screw shown in figure 1; and

figure 3 is similar to figure 2 and shows the mixing process.

The present invention is concerned with a continuous extruder apparatus with a screw 4, 4' on a screw shaft 3. Between a first screw portion 4 on the rear part of the shaft 3 and a second screw portion 4' on the forward part of the shaft 3, the screw has, at determined intervals, sections 1 made with a particular screw thread system, described further below, which determines the complete mixing of the material.

2

This means that the machine has simplicity of construction combined with considerable mixing capacities, as it is only necessary to change the screw (or screws in extruders with multiple screws) with the particular screw mentioned above to obtain a mixer-extruder.

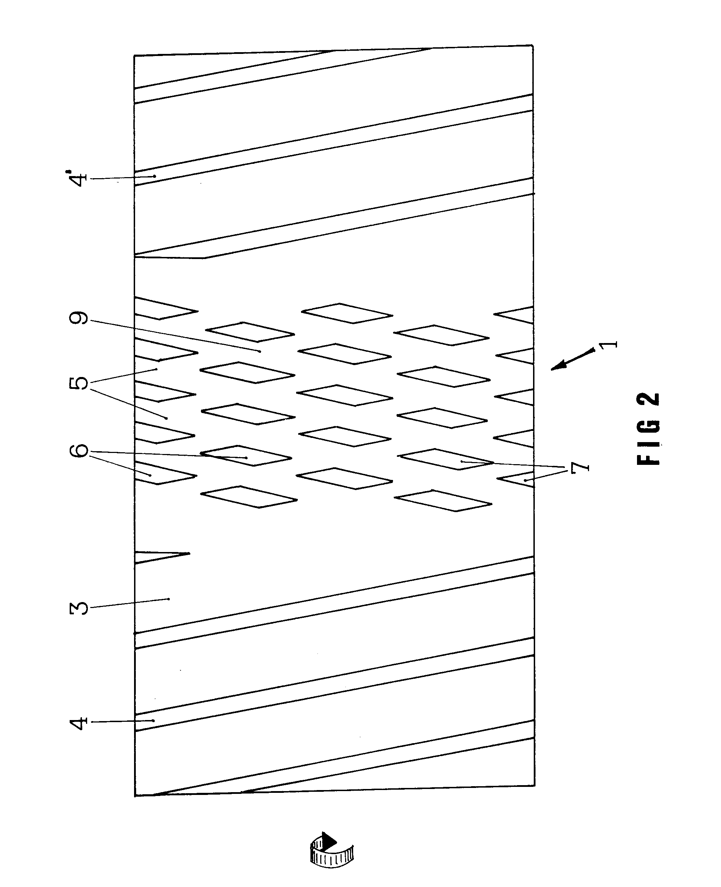

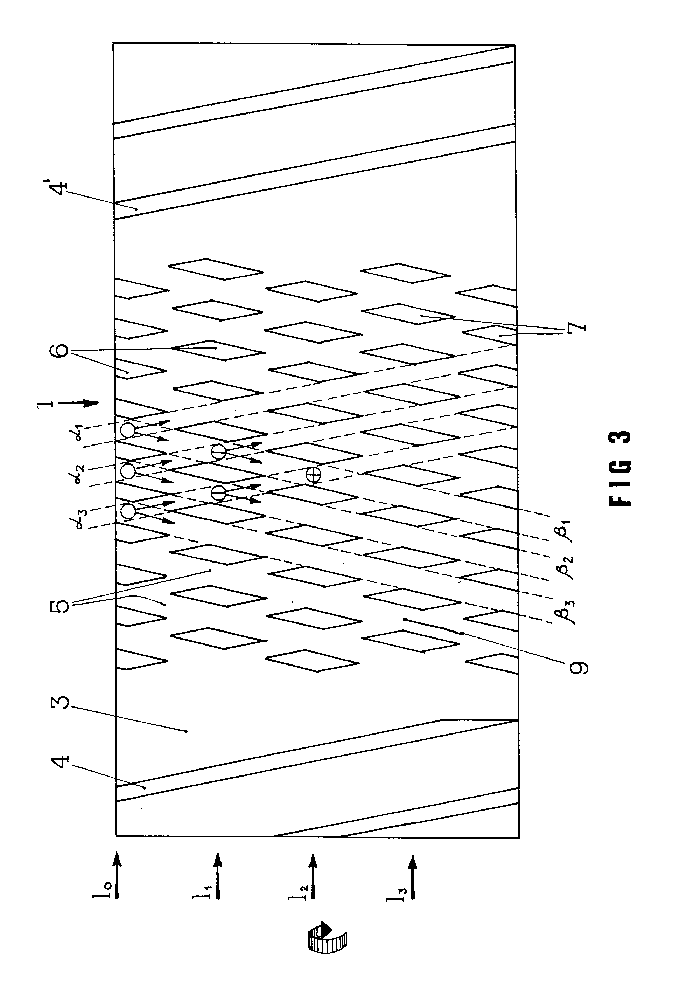

As can be seen in figure 2 the peculiar characteristic of the mixer is the presence of a series of channels 5 obtained, for example, from the intersection of two screw threads 6, 7, opposite to each other. In the illustrated embodiment a double forward screw thread 6 is shown, the double thread having the same pitch and direction of the screw 4, 4', and a second counter screw thread 7, again double threaded with the same pitch but the opposite direction to the screw 4,4'. For the above mentioned two kinds of screw threads it is possible to vary, respectively, the number of threads, the pitches and the section of channels, in width, depth and shape, according to the material to be mixed or production requirements. The counter screw thread 7, on which the present invention is based, may be interrupted by channels 5 or gates which do not necessarily form a thread. To give a better explanation of the principle on which the apparatus proposed is based, see figure 3 in which, for the sake of simplification, a plan diagram of a mixer is shown, having channels 5 of different width, the left-handed one with a larger width, supposing the screw thread 6 to be one with a right-handed thread. Said channels 5, opposite to each other, generate intersections 9 on their crossing points which are responsible, as will be seen hereinafter, for mixing of the material. Assume that the materials are pushed in the direction of the arrows, from the left hand side of the drawing towards the right, and that the screw 4, 4' rotates in an anti-clockwise direction. The channels helping to push forward the material, as they are obtained from a screw thread similar to the screw 4, 4' (which has been considered to be right-handed), are indicated with "$\alpha_i$" (i = 1, 2, 3) and the channels that push the material back are indicated with "$\beta_j$" (j = 1, 2, 3), while a particle of the material to be considered, situated where channels "$\alpha_i$" and "$\beta_j$" cross, is indicated with $dv_{ij}$.

Let us consider a particle $dv_{22}$ of material, located where channels "$\alpha_2$" and "$\beta_2$" cross.

Said portion of material, lacking predominant thrust, at a fraction "$d\theta$" of a turn of the screw, will split into two equal parts, corresponding to

$$\frac{d\,v_{22}}{2}\,.$$

These two parts will meet at crossing points "$\alpha_2$" "$\beta_1$" and "$\alpha_3$" "$\beta_2$" the particles

$$\frac{d\,v_{11}}{2} \text{ and } \frac{d\,v_{33}}{3}$$

, coming from channels "$\beta_1$" and "$\alpha_3$", so that the following results:

$$dv_{21} = \frac{dv_{32}}{2} + \frac{dv_{11}}{2} \qquad dv_{32} = \frac{dv_{33}}{2} + \frac{dv_{22}}{2}$$

Following the particles thus formed from a first mixing stage, at "$\alpha_3$" "$\beta_1$" a further mixing will occur, with the formation of a particle

$$dv_{31} = \frac{dv_{32}}{2} + \frac{dv_{21}}{2} = 2\frac{dv_{22}}{4} + \frac{dv_{33}}{4} + \frac{dv_{11}}{4}$$

From this simplified analysis of the pyramidal flow motion it can be seen how at the second crossing a $dv_{31}$ is obtained, formed by the mixture of the fourth parts of $2dv_{22}$, $dv_{33}$ and $dv_{11}$.

In practice the mixing in correspondence of the single crossing levels, indicated in the figure 3 with $1_0$, $1_1$, $1_2$, $1_3$, $1_4$ etc, takes place according to a geometrical progression. In other words, considering, in every crossing at level $1_0$, particles dv formed by a single component, in each crossing at level $1_1$ particles of material will be obtained which are each a mixture of two components, in every crossing at level $1_2$ the

3

EP 0 252 886 B1

particles will be a mixture of four components, of which two coming from the same crossing at level $1_0$. In every crossing at level $1_3$ the mixture will already be formed of eight components, and so on.

It thus derives that, while the screw 4, 4' rotates, the material is mixed a remarkable number of times and mixing also takes place between particles that have already been mixed.

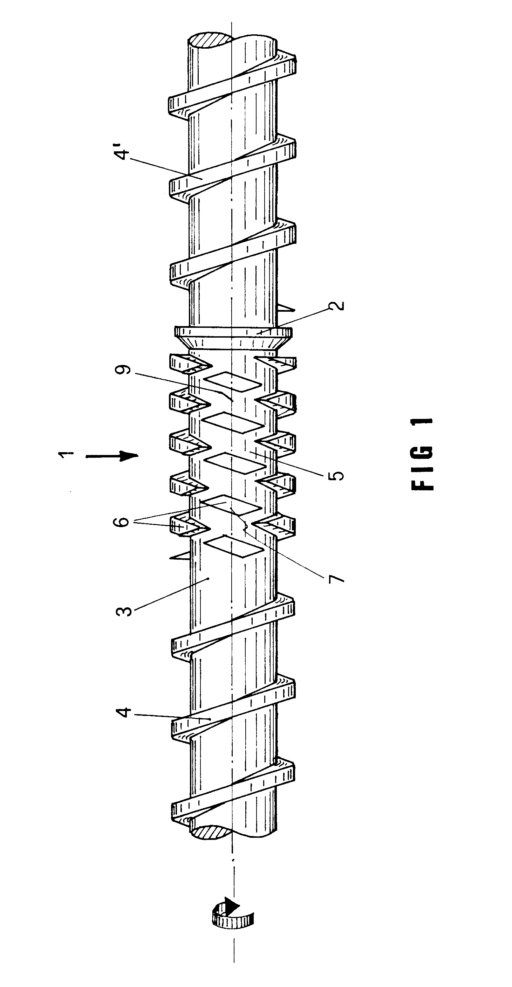

Determining factors of the present invention are: the presence of the opposite screw threads 6, 7, which causes the return flow, favouring further mixing of the material which has already been mixed; the choice of the speed of rotation of the material on the screw, this speed being at least equal to that of the translation movement of the material itself, this being essential for full homogenization of the products; and, last but not least, the presence downstream of the mixer, or mixers, of a flow restriction indicated with 2 in figure 1, that, by resulting in a modification of the flow rate, causes the material to remain in the mixer for as long as is required.

The proposed apparatus can be provided with two or more co-rotating or oppositely rotating screws, some having right-handed threads and other having left-handed threads so as to cause mixing, since the material is forced to move back and forth owing to the opposite directions of the screws. The different relative length of the screws causes variation of the mixing and productivity parameters according to requirements.

Efficient solutions may also be the realization of extruders with two or more co-rotating or oppositely rotating screws, each having stretches of right-handed and stretches of left-handed thread.

It is important to point out that in this proposed apparatus the friction caused by the flow of material through the various channels, in the case of use for the production of thermoplastics, aids in reaching the required melting temperature for mixing and working. Furthermore, in certain cases, the work performed by the mixer and therefore by the motor when the extruder has been started, allows the mixer to work continuously without the aid of heating electric resistances, since this system gives maximum conversion of mechanical energy into thermic energy.

**Claims**

1. A screw extruder for continuously blending, homogenizing, kneading and dispersing a material comprising

   a cylinder and a screw shaft (3) with an extruding screw (4, 4') contained in said cylinder,
   said extruding screw having on the rear part of said shaft (3) a first screw portion (4) extending in one direction and on the forward part of said shaft a second screw portion (4') extending also in said one direction
   characterized in that
   between said first and second screw portions (4, 4') a mixing section (5) is located comprising a single or multiple forward screw thread (6) formed by threading said shaft (3) in the same direction as said first and second screw portions (4, 4') and a single or multiple counterscrew thread (7) formed by threading said shaft in the opposite direction, with intersection of said forward screw thread (6), said forward screw thread (6) and said counterscrew thread (7) having the same pitch and the same thread multiplicity to delimit therebetween channels (5) that cross each other at a plurality of free intersections (9), one of said channels imparting a forward movement to the material while the other channel imparting a return movement to a part of said material to create a backward flow of material which, on meeting the forward flow causes the material from the two crossing channels to mix whereby the mixing becomes increasingly thorough as the forward flow of material proceeds, said forward and counterscrew threads (6, 7) and said first and second screw portions (4, 4') having the same diameter.

2. A screw extruder according to claim 1 in which said first and second screw portions (4, 4') have the same pitch.

3. A screw extruder according to claim 2, in which said forward and counterscrew threads (6, 7) in said mixing section (1) have the same pitch as said first and second screw portions (4, 4').

4. A screw extruder according to any of the preceding claims, in which forwardly to said mixing section (1) a flow restriction (2) is provided on said shaft (3) to restrict the flow rate of the material.

5. A screw extruder according to any of the preceding claims, in which a plurality of said mixing sections (1) are located in succession between screw portions (4, 4').

4

**Patentansprüche**

1. Schneckenextruder zum kontinuirlichen Mischen, Homogenisieren, Kneten und Verteilen eines Materials, bei welchem sich innerhalb eines Zylinders eine Schneckengewindewelle (3) mit einer Spritzenschnecke (4, 4') befindet, wobei die Spritzenschnecke auf der hinteren Seite der Welle (3) einen ersten Schneckenabschnitt (4), der sich in einer Richtung erstreckt und auf der vorderen Seite der Welle einen zweiten Schneckenabschnitt (4') der sich in die selbe Richtung erstreckt, aufweist, dadurch gekennzeichnet, dass sich zwischen dem ersten und dem zweiten (4, 4') Schneckenabschnitt ein Mischabschnitt (5) befindet, der ein eingängiges oder vielgängiges vorwärtsgerichtetes Schraubengewinde (6) enthält, das durch Einschneiden der Welle (3) in die selbe Richtung des ersten und zweiten Schnekkenabschnittes (4, 4') gebildet wird, und ein eingängiges oder viegängiges entgegengesetztes Schraubengewinde (7), das durch Einschneiden der Welle in die Gegenrichtung gebildet wird und sich mit dem vorwärtsgerichteten Schraubengewinde (6) überschneidet, das vorwärtsgerichtete Schraubengewinde (6) und das entgegengestzte Schraubengewinde (7) die selbe Gewindesteigung und die selbe Anzahl von Gewindegängen aufweisen und zwischeneinander Nuten (5) formen, die sich untereinander an einer Vielzahl von freien Schnittstellen (9) kreuzen, wobei eine der Nuten dem Material eine vorwärtsgerichte Bewegung verleiht und die andere Nute einem Teil des Materials eine zuruckgerichtete Bewegung verleiht, um einen Gegenstrom von Material zu bilden, der durch Auftreffen des vorwärtsfliessenden Materials eine Vermengung des Materials innerhalb der sich überschneidenden Nuten hervorruft, wobei die Vermengung jeweils stärker wird, desto weiter der Vorwärtsfluss des Materials gelangt, und weiterhin dadurch gekennzeichnet, dass der erste und der zweite Schneckenabschnitt (4, 4') den selben Durchmesser haben.

2. Schneckenextruder nach Anspruch 1, worin der erste und der zweite Schneckenabschnitt (4, 4') die selbe Gewindesteigung haben.

3. Schneckenextruder nach Anspruch 2, worin das vorwärtsgerichtete und das engegengestezte Schraubengewinde (6, 7) im Mischabschnitt (1) die selbe Gewindesteigung wie der erste und der zweite Schneckenabschnitt (4, 4') haben.

4. Schneckenextruder nach einem der einem der Ansprüche 1 bis 3, worin sich innerhalb des Mischabschnittes (1) eine Stromdrosselung (2) auf der Welle (3) befindet, um die Strömung des Materials zu drosseln.

5. Schneckenextruder nach einem der Ansprüche 1 bis 4, in dem sich eine Vielzahl von Mischabschnitten (1) in aufeinanderfolgender Anordnung zwischen den Schneckenabschnitten (4, 4') befinden.

**Revendications**

1. Extrudeuse à vis pour mélanger, homogénéiser, pétrir et disperser un matériau comprenant un cylindre et un arbre (3) à vis avec une vis extrudeuse (4, 4') contenue dans ledit cylindre, ladite vis extrudeuse ayant sur le côté postérieur de l'arbre (3) une première portion de vis (4) qui s'étend dans une direction et sur le côté antérieur de l'arbre une seconde portion de vis (4') qui s'étend dans la même direction, caractérisée en ce qu'entre la première et la seconde portion (4, 4') de vis, est placée une section de mélangement (5) qui comprend un filet simple ou multiple de direction avant (6) formé par filetage dudit arbre (3) dans la même direction que la première et la seconde portion de vis (4, 4') et un filet simple ou multiple de direction contraire (7) formé par filetage dudit arbre dans la direction opposée avec intersection dudit filet de direction avant (6), ledit filet de direction avant (6) et ledit filet de direction contraire ayant le même pas et le même nombre de filets pour délimiter entre eux des canaux (5) qui se croisent à plusieurs intersections libres (9), l'un de ces canaux donnant un mouvement en avant au matériau, tandis que l'autre canal donne à une partie dudit matériau un mouvement de retour pour créer un flux en arrière du matériau qui, en recontrant le flux en avant, fait mélanger le matériau qui vient des deux canaux qui se croisent, de façon à ce que le mélangement devienne progressivement plus complet au fur et à mesure que le flux de matériau en avant progresse, lesdits filets en direction avant et en direction opposée (6, 7) et lesdites première et seconde portions de vis (4, 4') étant du même diamètre.

**2.** Extrudeuse à vis selon la revendication 1, où lesdites première et seconde portions (4, 4') ont le même pas.

**3.** Extrudeuse à vis selon la revendication 2, où lesdits filets (6, 7) en direction avant et en direction opposée dans ladite section (1) de mélangement ont le même pas que lesdites première et seconde portions de vis (4, 4').

**4.** Extrudeuse à vis elon l'une quelconque des revendications précédentes, où dans la partie antérieure de ladite section de mélangement (1), on prévoit sur ledit arbre (3) un étranglement (2) pour réduire le débit de matériau.

**5.** Extrudeuse à vis selon l'une quelconque des revendications précédentes, où plusieurs desdites section de mélangement (1) sont disposées en succession entre les portions de vis (4, 4').

FIG 1

EP 0 252 886 B1

FIG 2

EP 0 252 886 B1

**FIG 3**